# EUROPEAN PATENT APPLICATION

(11) **EP 3 349 166 A1**
(43) Date of publication of application: **18.07.2018**
(21) Application number: 17167051.6
(22) Date of filing: 19.04.2017
(51) Int. Cl.: G06Q 30/02

(54) **SYSTEM AND METHOD TO CREATE, ANALYZE AND ADAPT ADVERTISEMENTS WITH 360-DEGREE IMAGES AND FILMS WITH OR WITHOUT VIRTUAL REALITY DEVICES**

(30) Priority: 12.01.2017 BR 102017000679
(71) Applicant: More Virtual Portal de Internet Eireli - ME., CEP.: 04.562-050 Ciudad de Sao Paulo (BR)
(72) Inventor: VIEIRA DE OLIVEIRA, Leonardo Bartz, Ciudad de São Paulo (BR)
(74) Representative: Gallego Jiménez, José Fernando

(57) **Abstract**

It refers to the visual and statistical analysis of data acquired from 360° images or films with or without Virtual Reality devices, allowing to generate heat maps and/or other types of graphs from data extracted from coordinate system, frequency, time, geographical location verified by a Geolocation system (GPS) and by points previously entered by the system operator or automatically suggested by the system called "Points of Interest"; such Points of Interest may also be automatically generated following the analysis and processing of the data extracted from the user's browsing and/or interaction; following the extraction of all the variables and their previous analysis, the system will analyze the heat map and/or other characteristics and reposition the 360° images and/or films displayed to the user according to his/her visualization preferences and/or suggest products or discounts according to the expressed interest.

## Description

### TECHNICAL FIELD OF THE INVENTION

This invention patent refers to the visual and statistical analysis of data acquired from 360° images or films with or without Virtual Reality devices, allowing to generate heat maps and/or other types of graphs from data extracted from coordinate system, frequency, time, geographical location verified by a Geolocation system (GPS) and by points previously entered by the system operator or automatically suggested by the system called "Points of Interest".

The Points of Interest can also be automatically generated following the analysis and processing of all the data extracted from the user's browsing and/or interaction.

Following the extraction of all the variables and their previous analysis, the system will analyze the heat map and/or other statistics and reposition the 360° images and/or films shown to the user according to the Points of Interest, his/her visualization preferences and/or suggest products or discounts according to the expressed interest.

For example, in the real estate context, a real estate buyer seeking for an apartment in a digital platform (WEB or Mobile Application) would interact with a 360° Living Room image or film. The system would analyze the user interaction with the 360° image or film and would note that such user expressed more interest in the television set placed in the room. According to the coordinate positioning and the frequency on which the user would interact with the object (TV). After extracting the data (heat maps and other types of graphs), the system would establish a correlation between the type of image (room) and the interest in the object (TV), then, the object would become a "Point of Interest". In the following images, the system would reposition all the 360° living room images and films in the position with the television set being highlighted (Point of Interest).

In another example, when the user was interacting with a 360° image or film of a leisure area and showed interest in the swimming pool, the system would automatically highlight all the swimming pools appearing in the next 360° images or films.

In another example in the retail context, the user browsing a virtual store would be analyzing a set of appliances in a 360° image or film with or without a Virtual Reality device. After being analyzed by the system, it is verified that a point of interest is the Built-in Stove. The system would prepare all the 360° images or films showing a built-in stove always being highlighted and could offer sales and/or services related to this product.

### STATE OF THE ART

In a survey conducted in specialized databanks, document no. _BR 10 2015 005930-2 - "SYSTEM AND METHOD TO ANALYZE MULTIVARIATE DATA EXTRACTED FROM IMAGES CAPTURED IN DIFFERENT VIEWS", referring to a system (300) and method to analyze two or more variables extracted from images captured in different views. The system (300) consists of four modules: image registration module (301) f data adjustment module (302) f heat map generation module (303) and statistical analysis module (304) f generating at least two types of results: visual analysis tools such as heat maps (305) f and common diagrams (306) f such as scatter plots.

The previously mentioned document does not anticipate the herein claimed characteristics, once it analyzes the data capture from various cameras of the same environment in contrast with the current application which will analyze the data from a single 360-degree image or film, will create Points of Interest following the analysis and will adapt the next images according to the previous data analysis, making the object of this application novel and provided with inventive activity.

### BRIEF DESCRIPTION OF THE INVENTION

This invention introduces a system which allows the analysis of multiple visual and browsing variables in 360° images or films with or without Virtual Reality devices creating a representation of heat maps adapting the 360° images or films and/or suggesting the creation of Points of Interest, subsequent products and services according to the user's or groups of users' preferences.

The system and method of this invention can be applied to a number of contexts, on which the analysis of 360° images or films with or without Virtual Reality devices is necessary, such as the Real Estate market, decoration, appliances, toys, sports, retail, education, among others.

### DESCRIPTION OF THE FIGURES

In order to supplement this description so as to obtain a better understanding of the characteristics of this invention and according to a preferred practical implementation of the same, the description is accompanied by a set of attached drawings, where, on an illustrated, but not limited way, it's operation is represented:

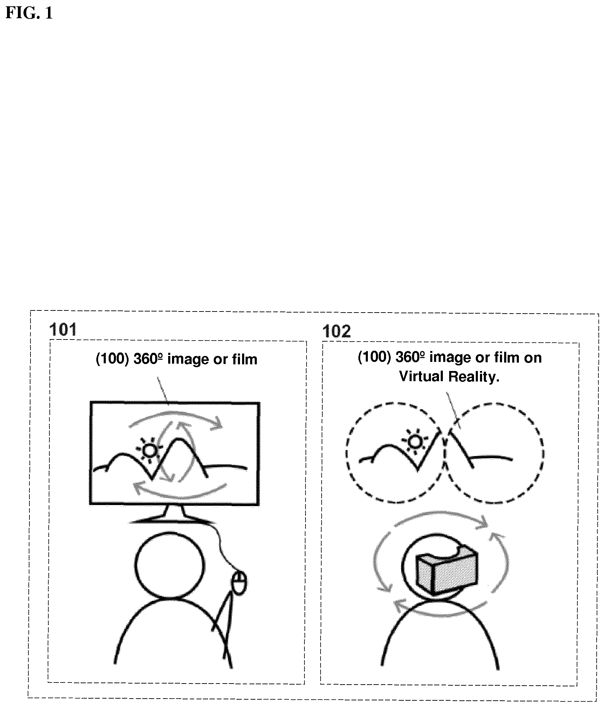

Figure 1 shows a user interacting with a 360° image or film (100) without (101) and with (102) a Virtual Reality device.

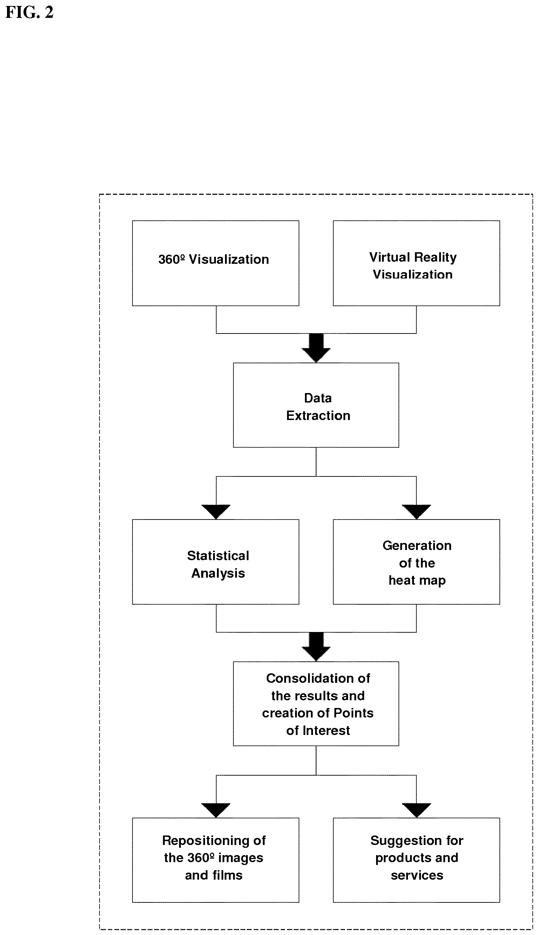

Figure 2 shows the entries in the system according to the achievement of this invention.
Figure 3 describes a possible exemplary scenario this invention system can be applied to.

### DETAILED DESCRIPTION OF THE INVENTION

With reference to the illustrated schemes, this patent invention refers to a system and method to create, analyze and adapt advertisements with 360-degree images and films with or without virtual reality devices, more precisely to the virtual and statistical analysis of data acquired from 360° images or films with or without Virtual Reality devices, allowing to generate heat maps and/or other types of graphs from data extracted from coordinate system, frequency, time, geographical location verified by a Geolocation system (GPS) and by points previously entered by the system operator or automatically suggested by the system called "Points of Interest".

The system and method of this invention can be applied to a number of contexts, such as the Real Estate Market, decoration, appliances, toys, sports, retail, education, among others.

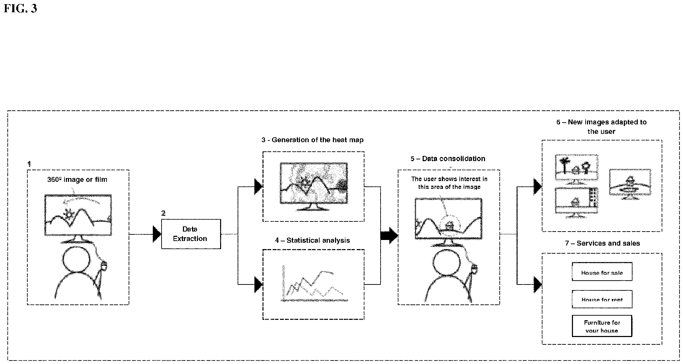

The scenario represented by Figure 3 comprises a scene where a user interacts with a 360° image in a desktop computer (1). The data are extracted (2). The heat map (3) is generated and statistical analyses (4) are created. From the behavioral pattern and consolidation of the data (5), the system can conclude that the user shows more interest by the house in the image which becomes a Point of Interest and consecutively adapts the standard visualization of the next images which contains houses (6), in addition to providing services and/or products related to the result (7).

This invention can be applied, for example, to a 360° cartoon, where the user showed more interest in a specific character and according to his/her behavior and visualization analysis, the system could change the course of the history or create advertisements and specific contents of such character for this user.

Another advantage comprises the real estate sales where the user would be exposed to 360° images or films containing some furniture. Following the system analysis, some objects of increased interest by the user could be offered with discounts or another type of sale.

The objectives and advantages mentioned above are achieved through the system which analysis multivariate data extracted from 360° images or films, with or without Virtual Reality devices.

The referred system comprises:
a) A 360° image or film registration module which processes the input data with or without Virtual Reality devices;
b) A module where points of interests can be created by the system operator or suggested by the system itself;
c) A module where Points of Interest can be generated by the system operator or automatically generated following the analysis and processing of the collected data;
d) A heat map generation module which creates a set or heat maps;
e) A statistical analysis module, provided in parallel to the heat map generation mode in order to extract statistical information and generate diagrams;
f) A module for readjusting the display of 360° images or films according to the data collected and processed; and
g) A module to suggest products and services according to the collected and processed data.

It is certain that, when this invention is put into practice, changes concerning certain construction and form details can be introduced, without moving away from the basic principles which are clearly substantiated in the set of claims, being thus understood that the employed terminology did not have a limitation purpose.

Due to the advantages it provides, and further, for holding truly innovative characteristics which meet all the novelty and originality requirements in the art, this system and method to create, analyze and adapt advertisements with 360-degree images and films with or without virtual reality devices provides the required conditions to deserve the invention patent privilege.

## Claims

1. System and method to create, analyze and adapt advertisements with 360-degree images and films with or without virtual reality devices, more precisely addresses the visual and statistical analysis of data acquired from 360° images or films with or without Virtual Reality devices, allowing to generate heat maps and/or other types of graphs from data extracted from coordinate system, frequency, time, geographical location verified by a Geolocation system (GPS) and by points previously entered by the system operator or automatically suggested by the system called "Points of Interest"; **characterized in that** it comprises a 360° image or film registration module which processes the input data with or without Virtual Reality devices; a module where points of interest can be created by the system operator or suggested by the system itself; a module where Points of Interest can be generated by the system operator or automatically generated following the analysis and processing of the collected data; a heat map generation module which creates a set of heat maps; a statistical analysis module, provided in parallel to the heat map generation mode in order to extract statistical information and generate diagrams; A module for readjusting the display of 360° images or films according to the data collected and processed; and a module to suggest products and services according to the collected and processed data.

2. System and method to create, analyze and adapt advertisements with 360-degree images and films with or without virtual reality devices according to claim 1, **characterized in that** it allows the user to interact with a 360° image or film in a personal computer (PC), mobile devices (Cell Phones and Tablets) and Virtual Reality devices (1); the data are extracted (2) and, then, the heat map is generated (3) and statistical analyses are created (4); from data consolidation (5), the system may conclude that the user has more interest in a certain area of the image which becomes a Point of Interest and consecutively adapts the standard visualization of the next images according the verified Points of Interest (6), the system operator may include Points of Interest (7) in addition to providing services and/or products related to the result (8).
